# EUROPÄISCHE PATENTANMELDUNG

(11) **EP 3 716 550 A1**
(43) Veröffentlichungstag der Anmeldung: **30.09.2020**
(21) Anmeldenummer: 19166089.3
(22) Anmeldetag: 29.03.2019
(51) Int. Cl.: H04L 12/931

(54) **VERFAHREN ZUR DATENKOMMUNIKATION IN EINEM INDUSTRIELLEN NETZWERK, STEUERUNG, NETZWERK, COMPUTERPROGRAMM UND COMPUTERLESBARES MEDIUM**

(71) Anmelder: Siemens Aktiengesellschaft, 80333 München (DE)
(72) Erfinder: Chen, Feng, 90537 Feucht (DE); Götz, Franz-Josef, 91180 Heideck (DE); Kießling, Marcel, 91235 Velden (DE); Nguyen, An Ninh, 90427 Nürnberg (DE); Schmitt, Jürgen, 90766 Fürth (DE)

(57) **Zusammenfassung**

Die Erfindung betrifft ein Verfahren zur Datenkommunikation in einem industriellen Netzwerk, an dem wenigstens eine Steuerung (2) und wenigstens ein von der Steuerung (2) verschiedenes, der Steuerung (2) zugeordnetes Endgerät (1), von dem die Steuerung (2) Messdaten empfängt und/oder an das die Steuerung (2) Stellwerte sendet, und das einen integrierten Netzwerkknoten aufweist, als Kommunikationsteilnehmer teilnehmen, bei dem von einer auf der wenigstens einen Steuerung (2) vorgesehenen Geräte-Netzwerkfunktions-Einheit (5) wenigstens eine Netzwerkfunktion des wenigstens einen der Steuerung (2) zugeordneten Endgerätes (1) als virtualisierte Netzwerkfunktion stellvertretend für das wenigstens eine der Steuerung (2) zugeordnete Endgerät (1) ausgeführt wird, und von der Geräte-Netzwerkfunktions-Einheit (5) zu wenigstens einem Netzwerkfunktions-Protokoll gehörige Nachrichten, die weitere an dem Netzwerk teilnehmende Kommunikationsteilnehmer von dem wenigstens einen der Steuerung (2) zugeordneten Endgerät (1) erwarten, stellvertretend für dieses generiert werden. Darüber hinaus betrifft die Erfindung eine Steuerung (2), ein Netzwerk, ein Computerprogramm und ein computerlesbares Medium.

## Beschreibung

Die Erfindung betrifft ein Verfahren zur Datenkommunikation in einem industriellen Netzwerk. Darüber hinaus betrifft die Erfindung eine Steuerung, ein Netzwerk, ein Computerprogramm und ein computerlesbares Medium.

Im Bereich der industriellen Automatisierung werden universelle Eingangs- und Ausgangsgeräte verwendet. Diese können beispielsweise in Maschinen eingesetzt werden, um Messwerte zu erfassen oder Ausgänge anzusteuern. Durch ein Programm in der speicherprogrammierbaren Steuerung (SPS) werden die Eingangsgrößen mit den Ausgangsgrößen verknüpft. Meist sind diese Geräte untereinander mit einem industriellen Echtzeitkommunikationssystem (z.B. PROFINET) verbunden. Vorteilhaft hat sich dabei Ethernet als Netzwerkstandard erwiesen.

An das Ethernet Netzwerk einer industriellen Automatisierungslösung bzw. -anlage können prinzipiell beliebige andere Geräte angeschossen werden. Durch das Kommunikationssystem werden die Daten und der Austauschmechanismus definiert. Für eine zuverlässige Automatisierung von Maschinen ist eine zuverlässige Kommunikation mit einer bekannten maximalen Verzögerungszeit im Netzwerk notwendig.

Bisher programmiert der Anwender ein Programm für die SPS. Diese befindet sich in der Regel innerhalb einer Maschine und ist über ein Netzwerk (Feldbus) an die Eingangs- und Ausgangsgeräte angeschlossen. Die Konfiguration des Netzwerkes erfolgt dabei entweder gar nicht (PROFINET RT) und es werden optional Diagnoseinformationen gesammelt - oder es erfolgt ein zeitliches Scheduling der Echtzeitdaten innerhalb einer festen zeitlichen Phase im Netzwerk (PROFINET IRT).

Beim zeitlichen Planen des Netzwerkes können die speziellen Gegebenheiten im industriellen Umfeld (z.B. Linien- und Ring-topologien mit hohem Hop-Count) berücksichtigt werden. Ohne die Beachtung der Netzwerkkonfiguration (PROFINET RT) kann nur durch die Einhaltung von sogenannten Aufbaurichtlinien ein Schutz der Echtzeitkommunikation sichergestellt werden. Durch die Einschränkung der Topologien und einer maximalen Einspeiselast von Endgeräten wird eine robuste Kommunikation ermöglicht. Ein Schutz gegenüber Fehlverhalten einzelner Geräte oder eines Aufbaufehlers besteht jedoch nicht.

Deswegen ist aus Sicht der Anmelderin der Einsatz von TSN Mechanismen (IEEE 802.1 Q) wünschenswert. In einem TSN Netzwerk erfolgt eine Uhrzeitsynchronisation im Netzwerk zwischen allen Netzwerkkomponenten und zu den Endgeräten. Dazu wird vom Synchronisationsprotokoll (IEEE 802.1 AS) ein Pfad im Netzwerk vom automatisch ausgewählten Uhrzeitmaster etabliert zu allen Komponenten bestimmt. Dies erfolgt durch den Austausch von sogenannten P2P (Peer-to-Peer) Nachrichten zwischen zwei benachbarten Geräten auf einem Link. Der Schutz von Echtzeitdaten (Streams bzw. geschützte Verbindungen) erfolgt durch ein weiteres P2P Protokoll, das sogenannten Stream Reservation Protokoll (SRP). Durch die lokale Verwaltung der Ressourcen der beteiligten Netzwerkknotens, etwa Bridges (z.B. Queue-Speicher und Weiterleite-Einträge in der FDB) kann eine Übertragung sichergestellt werden.

Beide Lösungen sind jedoch für allgemeine Ethernet-Netzwerke ausgelegt und berücksichtigen nicht die besonderen Gegebenheiten in industriellen Netzwerken. Dadurch sind die bisher eingesetzten Optimierungen - die sich z.B. durch den physikalischen Aufbau des Netzwerkes und der Kommunikationsbeziehungen ergeben - nicht anwendbar.

Nach Kenntnisstand der Anmelderin ist der Anwender einer Automatisierungslösung bisher gewohnt, dass ein System definiert ist, welches alle notwendigen Einstellung beschreibt und anhand des erstellten Benutzer-Programms alle notwendigen Einstellungen automatisch konfiguriert. Durch Trends wie Industrie 4.0 wird ein immer offener Zugang zu den Eingangs- und Ausgangskomponenten gewünscht.

So ist beispielsweise mit OPC UA eine Beschreibungsform für Daten definiert, mit der Anwender einzelne Daten im Netzwerk direkt auslesen und schreiben können (OPC steht dabei für O-pen Platform Communications und UA für Unified Architecture). Für den Einsatz im industriellen Umfeld ist für OPC UA ebenfalls ein Schutz gewünscht. Dieser ist in den aktuellen Systemen jedoch nicht möglich, da es keinen definierten Zugang zum Netzwerk gibt und jedes Echtzeitkommunikationssystem das Netzwerk unter eigener Kontrolle verwaltet und dabei keine anderen Verbindungen im Netzwerk berücksichtigt.

Für ein offenes System müssten bisher standardisierte Protokolle, wie z.B. SRP, in den Netzwerkkomponenten ausgeführt werden. Durch definierte Datenformate in den Paketen und der Beschreibung der lokal notwendigen Mechanismen und deren Konfiguration würde ein offenes System ermöglicht. Beliebige Anwendungen könnten so durch die Implementierung des standardisierten Protokolls im Netzwerk geschützte Datenübertragungen (Streams bzw. geschützte Verbindungen) einrichten lassen.

Es ist daher eine Aufgabe der vorliegenden Erfindung eine Möglichkeit zu schaffen, bekannte Konfigurationsmodelle, insbesondere das gemäß PROFINET vorbekannte Konfigurationsmodell beizubehalten und trotzdem ein Standard-konformes Verhalten anderer an das Netzwerk angeschlossener Geräte zu ermöglichen.

Diese Aufgabe wird gelöst durch ein Verfahren zur Datenkommunikation in einem industriellen Netzwerk, an dem wenigstens eine Steuerung und wenigstens ein von der Steuerung verschiedenes, der Steuerung zugeordnetes Endgerät, von dem die Steuerung Messdaten empfängt und/oder an das die Steuerung Stellwerte sendet, und das einen integrierten Netzwerkknoten aufweist, als Kommunikationsteilnehmer teilnehmen, bei dem von einer auf der wenigstens einen Steuerung vorgesehenen Geräte-Netzwerkfunktions-Einheit wenigstens eine Netzwerkfunktion des wenigstens einen der Steuerung zugeordneten Endgerätes als virtualisierte Netzwerkfunktion stellvertretend für das wenigstens eine der Steuerung zugeordnete Endgerät ausgeführt wird, und von der Geräte-Netzwerkfunktions-Einheit zu wenigstens einem Netzwerkfunktions-Protokoll gehörige Nachrichten, die weitere an dem Netzwerk teilnehmende Kommunikationsteilnehmer von dem wenigstens einen der Steuerung zugeordneten Endgerät erwarten, stellvertretend für dieses generiert werden.

Bevorzugt wird in analoger Weise von einer auf der wenigstens einen Steuerung vorgesehenen Knoten-Netzwerkkontrollfunktions-Einheit wenigstens eine Netzwerkfunktion wenigstens eines von dem wenigstens einen der Steuerung zugeordneten Endgerät verschiedenen Netzwerkknotens als virtualisierte Netzwerkfunktion stellvertretend für den Netzwerkknoten ausgeführt, und werden von der Knoten-Netzwerkfunktions-Einheit zu wenigstens einem Netzwerkfunktions-Protokoll gehörige Nachrichten, die weitere an dem Netzwerk teilnehmende Kommunikationsteilnehmer von dem wenigstens einen Netzwerkknoten erwarten, stellvertretend für diesen generiert.

Die Idee der vorliegenden Erfindung besteht mit anderen Worten in dem Einsatz virtualisierter Netzwerkfunktionen innerhalb der Steuerung, wodurch es möglich wird, ein bekanntes Konfigurationsmodell, insbesondere das aus PROFINET bekannte Konfigurationsmodell beibehalten zu können und trotzdem ein Standard-konformes Verhalten für andere an das Netzwerk angeschlossene Geräte zu ermöglichen.

Bei der Steuerung handelt es sich insbesondere um eine speicherprogrammierbare Steuerung (SPS), der in an sich bekannter Weise eines, bevorzugt mehrere Endgeräte zugeordnet sind. Besonders bevorzugt handelt es sich um eine PROFINET-Steuerung, insbesondere PROFINET-SPS. Die Geräte-Netzwerkkontrollfunktions-Einheit und/oder die Knoten-Netzwerkkontrollfunktions-Einheit sind dann entsprechend in einer PROFINET-Steuerung vorgesehen.

Der Steuerung zugeordnete Endgeräte können beispielsweise durch Feldgeräte mit integriertem Netzwerkknoten gegeben sein, die Sensoren und/oder Aktoren umfassen bzw. die mit Sensoren und/oder Aktoren verbindbar bzw. verbunden sind. Feldgeräte sind in der Regel verteilt und nahe eines zu steuernden Prozesses angeordnet.

Bei dem integrierten Netzwerkknoten kann es sich beispielsweise um einen integrierten Switch handeln. Ein Endgerät mit integriertem Netzwerkknoten weist mehr als einen Port auf. Es kann sich um ein 2- oder Mehr-Port-Gerät handeln.

Durch die Verwendung von virtualisierten Netzwerkfunktionen, z.B. für die Stream-Reservierung, können weiterhin Optimierungen in der Steuerung, etwa SPS vorgenommen werden. Dies insbesondere für ein bzw. das Teilnetzwerk, welches von der Steuerung und den zugehörigen Endgeräten gebildet wird, bzw. welches diese umfasst. Dabei ist es möglich die Kontrolle eines Teilsegmentes eines Echtzeitnetzwerkes komplett in der Steuerung, insbesondere SPS zu behalten, aber andere angeschlossene Geräte weiterhin über die standardisierten Protokolle ans Netzwerk anzubinden.

Insbesondere für eine standardisierte Anbindung weiterer, über die Steuerung und dieser zugeordneten Endgeräte hinausgehende Geräte werden von der Geräte-Netzwerkkontrollfunktions-Einheit zu wenigstens einem insbesondere standardisierten Netzwerkfunktions-Protokoll gehörige Nachrichten, die Kommunikationsteilnehmer von wenigstens einem der Endgeräte erwarten, stellvertretend für die Endgeräte generiert. In analoger Weise können von der Knoten-Netzwerkfunktions-Einheit zu wenigstens einem insbesondere standardisierten Netzwerkfunktions-Protokoll gehörige Nachrichten stellvertretend für Netzwerkknoten generiert werden.

Die Verwendung von standardisierten Protokollen, besonders bevorzugt standardisierten Peer-to-Peer(P2)-Protokollen ermöglicht ein konvergentes Netzwerk, das heißt, es können mehrere Echtzeitanwendungen mit hohen Anforderungen störungsfrei gemeinsam in einem Netzwerk betrieben werden.

Andere Anwendungen können durch insbesondere standardisierte (P2P-)Protokolle direkt mit für Endgeräte und/oder Netzwercknoten vorhandenen Instanzen innerhalb der Steuerung kommunizieren und so ebenfalls von den Optimierungen profitieren.

Zudem sind vereinfachte Instanzen möglich - die Pfadberechnung für redundante Verbindungen kann z.B. in einem MRP Ring deutlich vereinfacht werden. MRP steht dabei für das Media Redundancy Protocol. MRP Ringe sowie die TSN-Ressourcen-Reservierung in solchen sind in der ebenfalls auf die Anmelderin zurückgehenden europäischen Patentanmeldung Nr. 19 155 923.6 beschrieben. Konkret ist u.a. offenbart, dass für einfache Ring-Topologien in denen MRP aktiv ist (typisch für industrielle Automatisierungssysteme) anhand der Konfiguration von MRP und der Telegramme/Datenpakete eine Festlegung der redundanten Pfade im Ringsegment erfolgen kann, ohne dass dafür eine weitere Berechnung notwendig ist.

Aufgrund der Zentralisierung von Netzwerkkontrollfunktionen ist in den Endgeräten und/oder den Netzwerkknoten selbst beispielsweise keine aufwendige Protokollimplementierung mehr notwendig. Der notwendige Rechenaufwand für einfache Netzwerkkomponenten und Endgeräten lässt sich reduzieren. Durch die Auslagerung der Netzwerkfunktionen in den Endgeräten/Netzwerkknoten auf die Steuerung kann eine einfachere Hardware eingesetzt werden. Die notwendige Berechnung für die Einrichtung geschützter Verbindungen, insbesondere Streams wird ausgelagert und ist lokal nicht mehr notwendig. So wird es möglich die Vorteile geschützter Verbindungen, insbesondere die mit TSN verbundenen Vorteile auch für einfache Geräte mit integriertem netzwerkknoten, insbesondere einfache 2-bzw. Mehr-Port-Geräte zu nutzen, die beispielsweise über einen Feldbus mit einer zugehörigen Steuerung verbunden sind. Solche Geräte einfacher Art werden vielfach im industrielen Bereich, etwa als Feldgeräte genutzt. Sie weisen oftmals keine ausreichende Leistungsfähigkeit für den Rechenaufwand auf, der mit für TSN erforderlichen Netzwerkfunktionen verbunden ist. Durch die "ausgelagerte", zentralisierte Übernahme von der Steuerung, insbesondere SPS kann TSN auch in solchen Fällen genutzt werden.

Durch die zentrale Ausführung der Funktionen aus den Endgeräten kann ferner das vom Anwender gewohnte Verhalten einer zentralen Konfiguration aller Endgeräte weiterhin bestehen bleiben. Insbesondere können bisher bekannte Mechanismen von PROFINET bei einer Implementierung der Netzwerkkontrollfunktionen auf der Steuerung (SPS) weiterhin für das (lokale) Netzwerk verwendet werden.

Bei der Zeitsynchronisation beispielsweise lässt sich der Algorithmus zur Nachführung der lokalen Zeit aus mehreren Quellen (Redundanzmechanismus) auslagern - da dieser nicht zeitkritisch ist und die Daten lokal weiterhin mit dem Sende- und Empfangszeitstempel versehen werden.

Eine Steuerung, die virtualisierte Netzwerkfunktionen stellvertretend für Endgeräte und/oder Netzwerkknoten ausführt, weist bevorzugt eine oder mehrere offenen Schnittstellen auf. Durch die offenen Schnittstellen lassen sich andere Geräte mit Netzwerkfunktionen in dem Netzwerk betreiben. Als offene Schnittstellen sind insbesondere die Verbindungen durch die Netzwerkfunktion, insbesondere eines Stream Reservierungsprotokoll (SRP), der Instanzen für Endgeräte und/oder Netzwercknoten anzusehen. An jedem Anschluss der Endgeräte/Netzwercknoten kann so ein anderes Netzwerkgerät angeschlossen werden und im System durch die Netzwerkfunktionen teilnehmen.

Weiterhin bevorzugt wird von der Geräte-Netzwerkfunktions-Einheit wenigstens eine Netzwerkfunktion des wenigstens einen der Steuerung zugeordneten Endgerätes als virtualisierte Netzwerkfunktion stellvertretend ausgeführt, die für die Einrichtung wenigstens einer geschützten Verbindung erforderlich ist. Gleiches gilt bevorzugt für wenigstens eine von der Knoten-Netzwerkfunktions-Einheit stellvertretend ausgeführte Netzwerkfunktion.

Die Geräte-Netzwerkfunktions-Einheit führt bevorzugt auch für die Steuerung wenigstens eine Netzwerkfunktion aus, insbesondere wenigstens eine Netzwerkfunktion, die für die Einrichtung wenigstens einer geschützten Verbindung erforderlich ist.

Ein Beispiel einer geschützten Verbindung ist ein Stream, wie er von der Audio/Video Bridging (AVB) Task Group und insbesondere von der Time-Sensitive Networking (TSN) Task Group in der internationalen Norm IEEE 802.1 festgelegt ist. Für eine geschützte Verbindung sind bzw. werden zweckmäßiger Weise in aus dem Stand der Technik vorbekannter Weise Ressourcen an den beteiligten Netzwerkknoten zu reservieren. Eine geschützte Verbindung zeichnet sich insbesondere durch einen dieser zugeordneten eindeutigen Kenner, insbesondere einen Stream-Kenner bevorzugt in Form einer Stream-ID aus.

Bei den Nachrichten, die weitere Kommunikationsteilnehmer von wenigstens einem Endgerät/Netzwerkknoten erwarten, und die von der Geräte-/Knoten-Netzwerkfunktions-Einheit stellvertretend für dieses bzw. diesen generiert werden, handelt es sich bevorzugt um zu einem standardisierten Netzwerk-Kontrollfunktions-Protokoll gehörige Nachrichten.

Das Netzwerk ist zweckmäßiger Weise Ethernet-fähig, es handelt sich insbesondere um ein Ethernet-basiertes Netzwerk. Insbesondere, damit geschützte Verbindungen, etwa Streams mit garantierter Dienstgüte (englisch: Quality of Service, QoS) unterstützt werden, ist das Netzwerk bzw. sind insbesondere zumindest die beteiligten Netzwerkknoten bevorzugt AVB- bzw. TSN-fähig, unterstützt bzw. unterstützen insbesondere die Einrichtung geschützter Verbindungen mit reservierten Netzwerkressourcen an den beteiligten Netzwerkknoten. AVB und TSN sind aus dem Stand der Technik hinlänglich vorbekannt. Für die Einrichtung bzw. Etablierung von geschützten Verbindungen, insbesondere Streams kommt bevorzugt ein Reservierungsprotokoll, beispielsweise SRP und/oder MSRP insbesondere gemäß IEEE 802.1 Q zum Einsatz.

Grundsätzlich gilt, dass entweder nur Netzwerkfunktionen von Endgeräten oder sowohl Netzwerkfunktionen von Endgeräten als auch Netzwerkfunktionen von Netzwerkknoten zentralisiert von der Steuerung übernommen werden, also an diese praktisch "ausgelagert" sein können.

Im Netzwerk selbst können die Netzwerkfunktionen entweder in den Komponenten, also Netzwerkknoten (lokal) ausgeführt werden, oder diese ebenfalls zentral in der Steuerung, konkret von einer dann zu diesem Zwecke vorgesehen Knoten-Netzwerckontrollfunktions-Einheit dieser.

Bei mehreren Anwendungen kann jede Anwendung ihre Endgeräte über die bzw. in Form einer Geräte-Netzwerkkontrollfunktions-Einheit kontrollieren - in einem Netzwerk sind dadurch mehrere Instanzen möglich. Gleiches gilt für die beteiligten Netzwerkknoten.

Es ist auch möglich, dass Steuerung und Endgerät(e) einer Anwendung an unterschiedliche Netzwerksegmente/Teilnetzwerke angeschlossen sind. Durch die Verwendung beispielsweise von LLDP (Link Layer Discovery Protocol) zur Konfiguration der Kommunikationsbeziehung der benachbarten Komponenten können sich dann automatisch die logischen Peer-to-Peer(P2P)-Beziehungen ergeben.

Eine Steuerung und wenigstens ein dieser zugeordnetes Endgerät können insbesondere über einen Feldbus miteinander verbunden sein.

Wenn Netzwerkfunktionen sowohl eines oder mehrerer Endgeräte als auch eines oder mehrerer Netzwerkkonten zentralisiert von der Steuerung ausgeführt werden, kann ein direkter Datenaustausch durch eine interne Weitergabe der Protokollnachrichten der jeweiligen Instanzen zwischen der Geräte- und der Knote-Netzwerkkontrollfunktions-Einheit der Steuerung erfolgen. Zeichnen sich hingegen zum Beispiel die Netzwerkknoten durch eine lokale Implementierung der Netzwerkkontrollfunktion aus, kann ein Datenaustausch zwischen diesen erfolgen.

Auch können mehrere Teilsegmente/Teilnetzwerke mit unterschiedlichen Geräte- bzw. Knoten-Netzwerkfunktions-Einheiten unterschiedlicher Steuerungen eingerichtet werden. Bevorzugt ist dann jedem Teilsegment/Teilnetzwerk eine Steuerung zugeordnet, die eine Geräte-Netzwerkfunktions-Einheit und/oder eine Knoten-Netzwerkfunktions-Einheit umfasst, um Netzwerkfunktionen von Endgeräten und/oder Netzwerkknoten des Teilsegmentes/Teilnetzes als virtualisierte Funktionen stellvertretend auszuführen.

Insbesondere für die Datenübertragung zwischen dem bzw. den Endgerät(en) und der Steuerung kann eine Zeitsynchronisation vorgesehen sein. Dies bedeutet insbesondere, dass alle teilnehmenden Geräte ein gemeinsames Verständnis der Zeit haben bzw. benötigen. Die Zeitsynchronisation kann insbesondere für die Steuerung und/oder Endgeräte und/oder bei der Weiterleitung genutzt werden. Dabei können die Anwendungen selbst entweder synchronisiert sein oder nur beispielsweise periodisch zeitkritische Daten übertragen, die dann ausgewertet werden. Die Zeitsynchronisation kann für die Anwendungen genutzt werden - theoretisch können diese aber auch freilaufend sein beziehungsweise eine andere Art der Synchronisation verwenden (nicht IEEE 802.1 AS).

TSN hat mehrere sogenannte "Shaper" und Transmission Selection Mechanismen definiert, wobei die meisten davon keine synchronisierte Zeit in den Netzwerkgeräten benötigen. Die Übertragung der Daten kann selbst beispielsweise nur bei Verwendung von IEEE 802.1 Qbv - Enhancements for Scheduled Traffic und in einer möglichen Variante von IEEE 802.1 Qch von der synchronisierten Zeit abhängig sein. Es können auch andere Mechanismen, insbesondere die protokollbasierte Konfiguration von Shapern, welche nicht auf einer synchronisierten Datenübertragung zwischen den Netzwerkgeräten basiert, verwendet werden. Zudem können beispielsweise Verhältnisse zwischen Paketlängen und darauffolgenden Sendepausen berücksichtigt werden.

Weiterhin bevorzugt wird auf dem (jeweiligen) Endgerät, von welchem bzw. für welches die wenigstens eine Netzwerkfunktion auf der Steuerung als virtualisierte Funktion ausgeführt wird, eine getrennte Übertragungsschicht für eine Übertragung der Daten zwischen der Steuerung und dem (jeweiligen) Endgerät bereitgestellt. Das Netzwerk ist bevorzugt gemäß dem Standard IEEE 802.1 CS ausgebildet. In IEEE 802.1 CS ist der Nachfolger von MRP (Multiple Registration Protocol) definiert. Durch die Einführung der getrennten Übertragungsschicht kann eine Übertragung auch zu einem Stellvertreter beziehungsweise der Steuerung delegiert werden. Anhand der Codierungen in der Transportschicht kann so eine IP-Kommunikation verwendet werden.

In weiterer vorteilhafter Ausgestaltung ist die Verwendung bzw. die Anwendung des link-lokalen Registrierungsprotokolls (Link-local Registration Protocol - LRP) vorgesehen. Dieses link-lokale Registrierungsprotokoll ermöglicht insbesondere die Kombination von Netzwerkelementen und Slave-Endgeräten in einem Netzwerk. Die Ausführung der Netzwerkfunktion erfolgt dann für das (jeweilige) Endgerät in der Steuerung beziehungsweise einem Proxy-System, wodurch das Endgerät selbst zum Slave wird. Des Weiteren ermöglicht die Ausführung in dem Proxy so eine Zentralisierung von vielen einzelnen Instanzen einer Netzwerkfunktion in einer Steuerung. Die Steuerung kann hier als Proxy dienen. Besonders bevorzugt werden dann zu einem insbesondere standardisierten Protokoll gehörige Nachrichten, etwa zu SRP gehörige Nachrichten, wie Talker Advertises und/oder Listener Joins als LRP-Dateneinheiten (LRPDUs, Link-local Registration Protocol Data Units) ausgetauscht. Im Falle von SRP beispielsweise können Talker Adverstises und/oder Listener Joins als LRPDUs ausgetauscht werden.

Bevorzugt ist das Netzwerk nach dem Standard IEEE 802.1 CS ausgebildet. Somit werden die erweiterten Möglichkeiten von IEEE 802.1 CS mit den Möglichkeiten einer Virtualisierung von Funktionen im Netzwerk kombiniert. Dadurch können einfache Endgeräte entlastet werden. Zudem kann ein System mit sehr einfachen Komponenten (Endgeräten/netzwerkknoten) und einem leistungsfähigen Proxy entstehen.

Es kann sein, dass nur eine Netzwerkfunktion für ein Endgerät und gegebenenfalls einen Netzwerkknoten zentralisiert und stellvertretend von der Steuerung als virtualisierte Funktion ausgeführt wird. Alternativ dazu ist es natürlich auch möglich, je Endgerät und gegebenenfalls Netzwerkknoten mehrere Netzwerkfunktionen als virtualisierte Funktionen auf der Steuerung ausgeführt werden.

Weiterhin ist vorteilhaft, wenn die Ausführung der wenigstens einen Netzwerkfunktion durch die zentrale Geräte-Netzwerkfunktions-Einheit umfasst, dass von dieser wenigstens ein standardisiertes Netzwerkfunktions-Protokoll stellvertretend für das wenigstens eine der Steuerung zugeordnete Endgerät abgewickelt wird. Besonders bevorzugt wird ein für die Einrichtung geschützter Verbindungen erforderliches Reservierungsprotokoll von der Geräte-Netzwerkfunktions-Einheit als virtualisierte Netzwerkfunktion stellvertretend für das wenigstens eine der Steuerung zugeordnete Endgerät ausgeführt. Dann können ferner von der Geräte-Netzwerkfunktions-Einheit zu dem Reservierungsprotokoll gehörige Nachrichten, die weitere an dem Netzwerk teilnehmende Kommunikationsteilnehmer von dem wenigstens einen der Steuerung zugeordneten Endgerät erwarten, stellvertretend für dieses generiert werden.

Sofern Netzwerkfunktionen eines oder mehrerer von Netzwercknoten zentralisiert von der Steuerung ausgeführt werden, kann in analoger Weise vorgesehen sein, dass die Ausführung der wenigstens einen Netzwerkfunktion durch die Knoten-Netzwerfunktions-Einheit umfasst, dass von dieser wenigstens ein standardisiertes Netzwerkfunktions-Protokoll stellvertretend für den wenigstens einen Netzwerkknoten abgewickelt wird. Auch hier gilt bevorzugt, dass ein für die Einrichtung geschützter Verbindungen erforderliches Reservierungsprotokoll von der Knoten-Netzwerkfunktions-Einheit als virtualisierte Netzwerkfunktion stellvertretend für den wenigstens einen Netzwerkknoten ausgeführt wird. Dann können ferner von der Knoten-Netzwerkfunktions-Einheit zu dem Reservierungsprotokoll gehörige Nachrichten, die weitere an dem Netzwerk teilnehmende Kommunikationsteilnehmer von dem wenigstens einen Netzwerkknoten erwarten, stellvertretend für diesen generiert werden.

Bei dem Reservierungsprotokoll kann es sich beispielsweise um das Stream-Reservierungsprotokoll (SRTP), insbesondere gemäß IEEE 802.1Q handeln. Dieses wird bisher lokal von Endgeräten, insbesondere Netzwerkknoten abgewickelt. Eine zentralisierte Abwicklung durch die Steuerung für diese zugeordnete Endgeräte macht es u.a. möglich, dass besonders einfache Endgeräte (weiter) verwendet werden können.

Alternativ oder zusätzlich kann ein Uhrzeit-Synchronisierungsprotokoll, bevorzugt gemäß IEEE 802.1 AS als Netzwerckontrollfunktions-Protokoll stellvertretend für das wenigstens eine Endgerät und gegebenenfalls den wenigstens einen Netzwerkknoten abgewickelt und bevorzugt zu einem solchen gehörige Nachrichten stellvertretend generiert werden.

Prinzipiell gilt, dass verschiedene Netzwerkfunktionen von der Steuerung als virtualisierte Funktionen stellvertretend ausgeführt werden können. Besonders bevorzugt werden Netzwerkkontrollfunktionen stellvertretend ausgeführt. Netzwerckontrollfunktionen sind bevorzugt solche, die eine Kontrollebene (Control Plane) betreffen bzw. in einer solchen abzuwickeln sind bzw. abgewickelt werden und nicht in einer Datenebene (Data Plane). Insbesondere dient die Kontrollebene zur Konfiguration der Datenebene und ist benötigt keine direkte Interaktion mit den Frames der Echtzeitdaten bei deren Weiterleitung.

Besonders bevorzugt wird wenigstens eine TSN-Netzwerk(kontroll)funktion stellvertretend für wenigstens ein Endgerät und gegebenenfalls wenigstens einen Netzwerkkonten als virtualisierte Funktion von der Steuerung ausgeführt.

Neben der bereits erwähnten Streamreservierung und/oder einer Zeitsynchronisation kommen auch spezielle Ressourcenberechnungsvarianten bzw. -Algorithmen für spezielle Topologien als virtualisierte Netzwerkkontrollfunktionen in Frage. So können beispielsweise, wenn die Netzwerktopologie, in welcher die Endgeräte angeordnet sind, durch eine lange Linie oder einen Ring gegeben ist, speziell dafür geeignete Ressourcenberechnungs-Algorithmen über die Auswahl entsprechender virtualisierter Funktionen genutzt werden.

Eine weitere Ausführungsform zeichnet sich dadurch aus, dass das wenigstens eine der Steuerung zugeordnete Endgerät von der Geräte-Netzwerkfunktions-Einheit für wenigstens eine geschützte Verbindung konfiguriert wird. Auch ist es möglich, dass die Steuerung selber von der Geräte-Netzwerkfunktions-Einheit für wenigstens eine geschützte Verbindung konfiguriert wird

In analoger Weise kann wenigstens ein Netzwerkknoten von der Knoten-Netzwerkfunktions-Einheit für wenigstens eine geschützte Verbindung konfiguriert werden, wobei die Konfiguration bevorzugt die Generierung von Weiterleite-Einträgen in einer Filterungs-Datenbank und/oder die Anpassung von Shapern umfasst.

Eine virtualisierte Netzwerkfunktion eines Endgerätes/Netzwerkknotens benötigt in der Regel weiterhin lokale Einstellungen des Endgerätes/Netzwerkknotens. Dem wird mit diesen vorteilhaften Ausführungsformen Rechnung getragen. Mit anderen Worten nimmt die Steuerung, konkret die Geräte- bzw. Knoten-Netzwerkfunktions-Einheit dieser die in der Regel noch erforderliche lokale Konfiguration vor.

Ferner kann vorgesehen sein, dass der wenigstens einen Steuerung mehrere jeweils einen integrierten Netzwerkknoten aufweisende Endgeräte zugeordnet sind, von denen die wenigstens eine Steuerung jeweils Messdaten empfängt und/oder an die die wenigstens ein Steuerung jeweils Stellwerte sendet. Die Geräte-Netzwerkfunktions-Einheit führt dann insbesondere für jedes zugeordnete Endgeräte wenigstens eine Netzwerkfunktion als virtualisierte Netzwerkfunktion stellvertretend aus, wobei die Geräte-Netzwerkfunktions-Einheit bevorzugt für jedes zugeordnete Endgerät eine Instanz für wenigstens eine zu dem jeweiligen Endgerät gehörige Netzwerkfunktion umfasst.

In analoger Weise kann vorgesehen sein, dass der wenigstens einen Steuerung mehrere zu dem wenigstens einen der Steuerung zugeordneten Endgerät verschiedene Netzwerkknoten zugeordnet sind. Die Knoten-Netzwerkfunktions-Einheit führt dann insbesondere für jeden zugeordneten Netzwerkknoten wenigstens eine Netzwerkfunktion als virtualisierte Netzwerkfunktion stellvertretend aus, wobei die Knoten-Netzwerkfunktions-Einheit bevorzugt für jeden zugeordnete Netzwerkknoten eine Instanz für wenigstens eine zu dem jeweiligen Netzwerkknoten gehörige Netzwerkfunktion umfasst. Da die Netzwerkfunktion als Instanz für jedes Gerät ausgeführt wird, kann die Netzwerktopologie durch das Hinzufügen von Geräten mit lokaler Netzwerkfunktion ergänzt bzw. verändert werden. Auf den der Steuerung zugeordneten Geräten ist lokal keine Ausführung der Netzwerkfunktion notwendig.

Für verschiedene Anwendungen können verschiedenen Geräte-Netzwerkfunktions-Einheiten vorgesehen sein, von denen dann jeweils wenigstens eine für die jeweilige Anwendung erforderliche Netzwerkfunktion wenigstens eines Endgerätes als virtualisierte Netzwerkfunktion stellvertretend für das wenigstens eine Endgerät ausgeführt wird.

Selbstverständlich können mehrere Teilnetzwerke vorhanden sein. Entsprechend ist in Weiterbildung vorgesehen, dass das Netzwerk mehrere Teilnetzwerke umfasst und an mehreren der Teilnetzwerke jeweils eine Steuerung und wenigstens ein dieser zugeordnetes Endgerät, von dem die jeweilige Steuerung Messdaten empfängt und/oder an das die jeweilige Steuerung Stellwerte sendet, teilnimmt. Dann kann auf den Steuerungen mehrerer Teilnetzwerke eine zentrale Geräte-Netzwerkfunktions-Einheit vorgesehen sein, die wenigstens eine Netzwerkfunktion wenigstens eines Endgerätes des jeweiligen Teilnetzwerkes als virtualisierte Netzwerkfunktion stellvertretend ausführt. Von der Geräte-Netzwerkfunktions-Einheit können ferner zu wenigstens einem Netzwerkfunktions-Protokoll gehörige Nachrichten, die weitere an dem Netzwerk teilnehmende Kommunikationsteilnehmer von wenigstens einem der Endgeräte des jeweiligen Teilnetzwerkes erwarten, stellvertretend für dieses generiert werden.

Alternativ oder zusätzlich kann auf den Steuerungen mehrere Teilnetzwerke eine zentrale Knoten-Netzwerkfunktions-Einheit vorgesehen sein, die wenigstens eine Netzwerkfunktion wenigstens eines Netzwerkknotens des jeweiligen Teilnetzwerkes als virtualisierte Netzwerkfunktion stellvertretend ausführt, und von der Knoten-Netzwerkfunktions-Einheit können zu wenigstens einem Netzwerkfunktions-Protokoll gehörige Nachrichten, die weitere an dem Netzwerk teilnehmende Kommunikationsteilnehmer von wenigstens einem der Netzwerkknoten des jeweiligen Teilnetzwerkes erwarten, stellvertretend für dieses generiert werden.

Auch ist es möglich, dass eine Steuerung Netzwerkfunktionen von Endgeräten und gegebenenfalls Netzwerkknoten virtualisiert ausführt, die an einem anderen Teilnetzwerk teilnehmen.

Ein weiteres Ausführungsbeispiel zeichnet sich daher dadurch aus, dass die Geräte-Netzwerkfunktions-Einheit der Steuerung wenigstens eines Teilnetzwerkes wenigstens eine Netzwerkfunktion wenigstens eines Endgerätes eines anderen Teilnetzwerkes als virtualisierte Netzwerkfunktion stellvertretend ausführt. Von einem Endgerät eines anderen Teilnetzwerkes muss die Steuerung nicht unbedingt Messdaten empfangen und/oder an dieses Stellwerte senden, wobei dies auch nicht ausgeschlossen ist.

Alternativ oder zusätzlich können von der Geräte-Netzwerkfunktions-Einheit einer Steuerung wenigstens eines Teilnetzwerkes zu wenigstens einem Netzwerkfunktions-Protokoll gehörige Nachrichten, die Kommunikationsteilnehmer von wenigstens einem Endgerät eines anderen Teilnetzwerkes erwarten, stellvertretend für dieses generiert werden.

In analoger Weise ist möglich, dass die die Knoten-Netzwerkfunktions-Einheit der Steuerung wenigstens eines Teilnetzwerkes wenigstens eine Netzwerkfunktion wenigstens eines Netzwerkknotens eines anderen Teilnetzwerkes als virtualisierte Netzwerkfunktion stellvertretend ausführt. Alternativ oder zusätzlich können von der Knoten-Netzwerkfunktions-Einheit einer Steuerung wenigstens eines Teilnetzwerkes zu wenigstens einem Netzwerkfunktions-Protokoll gehörige Nachrichten, die Kommunikationsteilnehmer von wenigstens einem Netzwerkknoten eines anderen Teilnetzwerkes erwarten, stellvertretend für dieses generiert werden.

Sind mehrere Teilnetzwerke vorhanden, kann zu jedem Teilnetzwerk wenigstens eine Anwendung gehören.

Erfolgt der Datenaustausch über geschützte Verbindungen, insbesondere Streams, kann vorgesehen sein, dass für den Datenaustausch innerhalb wenigstens eines Teilnetzwerkes eine andere Verbindungsklasse verwendet wird als für den Datenaustausch innerhalb wenigstens eines anderen Teilnetzwerkes.

Sind beispielsweise drei Teilnetzwerke insbesondere mit jeweils einer als Proxy dienenden Steuerung und mehreren zu dieser gehörenden Endgeräten vorgesehen, können drei verschiedenen Klassen geschützter Verbindungen, insbesondere drei verschiedene Streamklassen für den Teilnetzwerk-internen Datenaustausch vorgesehen sein.

Für den Datenaustausch zwischen verschiedenen Teilnetzwerken kann ferner eine Verbindungsklasse, insbesondere Streamklasse mit geringeren Kommunikationsanforderungen genutzt werden als für den Teilnetzwerk-internen Datenaustausch. Durch beispielswiese eine lokale Konfiguration von Teilnetzwerken für eine hoch performante Streamklasse (z.B. gemäß PROFINET IRT - entsprechend SR-Class D, E und F) und einer gemeinsamen überlagerten Klasse mit niedrigeren Kommunikationsanforderungen (PROFINET RT - entspricht SR-Class C) können größere Netzwerke aufgebaut werden. In einer lokalen Streamklasse sind dann Anwendungen mit höchsten Anforderungen ermöglicht - z. B. die Steuerung von Motoren für die Maschine oder einen Roboter. In der Klasse mit niedrigeren Anforderungen kann beispielsweise eine überlagerte Regelung z.B. zwischen Maschinen oder die Bewegungssynchronisation zwischen mehreren Robotern erfolgen. Dabei können die Netzwerkkontrollfunktionen zentralisiert in der Steuerung oder lokal in Netzwerkknoten ausgeführt werden. Die Funktionen in den Endgeräten können ebenfalls zentral oder verteilt ausgeführt werden. Im Industrieumfeld gibt es meist eine zentrale Komponente mit lokalem Netzwerk für eine Regelungsaufgabe, die Steuerung, insbesondere SPS mit dem Feldbussegment.

Eine weitere besonders bevorzugte Ausführungsform des erfindungsgemäßen Verfahrens zeichnet sich ferner dadurch aus, dass an dem Netzwerk wenigstens ein Kommunikationsteilnehmer, insbesondere Endgerät teilnimmt, der OPC UA für die Datenkommunikation nutzt. Dann ist bevorzugt eine OPC-UA-Netzwerkfunktions-Einheit auf einer von dem wenigstens einen OPC UA nutzenden Kommunikationsteilnehmer verschiedenen Recheneinrichtung vorgesehen. Von der OPC-UA-Netzwerkfunktions-Einheit wird dann insbesondere wenigstens eine Netzwerkfunktion des wenigstens einen OPC UA nutzenden Kommunikationsteilnehmers als virtualisierte Netzwerkfunktion stellvertretend für diesen ausgeführt. Auch können von der OPC-UA-Netzwerkfunktions-Einheit zu wenigstens einem Netzwerkfunktions-Protokoll gehörige Nachrichten, die weitere an dem Netzwerk teilnehmende Kommunikationsteilnehmer von dem wenigstens einen OPC UA nutzenden Kommunikationsteilnehmer erwarten, stellvertretend für diesen generiert werden. Eine OPC-UA-Netzwerkfunktions-Einheit kann beispielsweise auf einem Server vorgesehen sein und die Funktionen insbesondere der Stream Reservierung (SRP) für das Endgerät übernehmen. Durch die stellvertretende Ausführung lässt sich die notwendige Erweiterung für das OPC UA Endgerät lokal auf ein Minimum reduzieren und auf dem leistungsfähigen Server stellvertretend ausführen. Durch die Verwendung der standardisierten Stream Reservierung können beliebige Endgeräte an die Netzwerkkomponenten angeschlossen werden und geschützte Verbindungen vom Netzwerk einrichten lassen. Eine gemeinsame Verwendung eines Netzwerkes mit geschützten Echtzeitverbindungen von mehreren Anwendungen wird möglich.

Gegenstand der Erfindung ist ferner eine Steuerung, insbesondere PROFINET-Steuerung, die zur Durchführung des erfindungsgemäßen Verfahrens ausgebildet und/oder eingerichtet ist.

Die Steuerung weist bevorzugt eine Geräte-Netzwerkfunktions-Einheit auf, die dazu ausgebildet und/oder eingerichtet ist, wenigstens eine Netzwerkfunktion wenigstens eines der Steuerung zugeordneten, einen integrierten Netzwerkknoten aufweisenden Endgerätes, von dem die Steuerung Messdaten empfängt und/oder an das die Steuerung Stellwerte sendet, als virtualisierte Netzwerkfunktion stellvertretend für das wenigstens eine der Steuerung zugeordnete Endgerät auszuführen. Weiterhin bevorzugt ist die Geräte-Netzwerkfunktions-Einheit dazu ausgebildet und/oder eingerichtet, um zu wenigstens einem Netzwerkfunktions-Protokoll gehörige Nachrichten, die weitere Kommunikationsteilnehmer von dem wenigstens einen der Steuerung zugeordneten Endgerät erwarten, stellvertretend für dieses zu generieren.

Die erfindungsgemäße Steuerung kann auch eine Knoten-Netzwerkfunktions-Einheit aufweisen, die dazu ausgebildet und/oder eingerichtet ist, wenigstens eine Netzwerkfunktion wenigstens eines der Steuerung zugeordneten Netzwerkknotens als virtualisierte Netzwerkfunktion stellvertretend für den wenigstens einen der Steuerung zugeordneten Netzwerkknoten auszuführen. Die Knoten-Netzwerkfunktions-Einheit kann ferner dazu ausgebildet und/oder eingerichtet sein, um zu wenigstens einem Netzwerkfunktions-Protokoll gehörige Nachrichten, die weitere Kommunikationsteilnehmer von dem wenigstens einen der Steuerung zugeordneten Netzwerkknotenerwarten, stellvertretend für diesen zu generieren.

Es sei angemerkt, dass eine auf einer Steuerung vorgesehene Geräte- und/oder Knoten-Netzwerkfunktions-Einheit eine rein funktionale Einheit sein kann, die beispielsweise durch eine Software gegeben oder implementiert ist, die sich auf Hardware der Steuerung befindet und auf dieser ausgeführt werden kann bzw. wird. Eine Steuerung kann hierfür bevorzugt wenigstens einen Prozessor und/oder Speicher umfassen.

Auch bei einer gegebenenfalls vorhandenen der OPC-UA-Netzwerkfunktions-Einheit kann es sich um eine rein funktionale Einheit handeln. Eine solche kann beispielsweise durch eine geeignete Software auf einem Server gegeben bzw. implementiert sein.

Die Erfindung betrifft auch ein Netzwerk, insbesondere für eine Automatisierungsanlage und/oder Fertigungsanlage, mit einer oder mehreren erfindungsgemäßen Steuerungen. Das Netzwerk umfasst bevorzugt zu der oder Steuerungen gehörige Endgeräte, etwa Feldgeräte und mehrere Netzwerknoten.

Ein weiterer Gegenstand der vorliegenden Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Teildarstellung eines industriellen Netzwerkes mit in den Endgeräten und den Netzwerkknoten lokal implementierten Netzwerkfunktionen;
- FIG 2: das Netzwerk aus FIG 1, wobei Netzwerkfunktionen der Endgeräte von einer Geräte-Netzwerkfunktions-Einheit als virtualisierte Netzwerkfunktion stellvertretend ausgeführt werden;
- FIG 3: das Netzwerk aus FIG 1, wobei Netzwerkfunktionen der Endgeräte von einer Geräte-Netzwerkfunktions-Einheit und Netzwerkfunktionen der Netzwerkknoten von eine Knoten-Netzwerkfunktions-Einheit als virtualisierte Netzwerkfunktion stellvertretend ausgeführt werden;
- FIG 4: das in FIG 3 gezeigte Szenario, wobei die Steuerung, in welcher die Geräte- und die Knoten-Netzwerkfunktions-Einheit vorgesehen sind, dargestellt ist;
- FIG 5: eine weitere rein schematische Teildarstellung eines industriellen Netzwerkes mit in den Endgeräten und den Netzwerkknoten lokal implementierten Netzwerkfunktionen, wobei ein Endgerät OPC UA nutzt;
- FIG 6: das Netzwerk aus FIG 5, wobei Netzwerkfunktionen der Endgeräte von einer Geräte-Netzwerkfunktions-Einheit bzw. einer OPC-UA- Netzwerkfunktions-Einheit als virtualisierte Netzwerkfunktion stellvertretend ausgeführt werden;
- FIG 7: das Netzwerk aus FIG 5, wobei Netzwerkfunktionen der Endgeräte von einer Geräte-Netzwerkfunktions-Einheit bzw. einer OPC-UA-Netzwerkfunktions-Einheit und Netzwerkfunktionen der Netzwerkknoten von einer Knoten Netzwerkfunktions-Einheit als virtualisierte Netzwerkfunktion stellvertretend ausgeführt werden;
- FIG 8: eine weitere rein schematische Teildarstellung eines industriellen Netzwerkes mit drei Teilnetzwerken/Teilsegmenten mit jeweils einer Steuerung, wobei Netzwerkfunktionen der Endgeräte jeweils von einer Geräte-Netzwerkfunktions-Einheit und Netzwerkfunktionen von Netzwerkknoten teilweise von einer Knoten-Netzwerkfunktions-Einheit als virtualisierte Netzwerkfunktion stellvertretend ausgeführt werden; und
- FIG 9: das Szenario aus FIG 8, wobei verschieden Streamklassen in und zwischen den Teilnetzwerken genutzt werden.

Gleiche Komponenten bzw. Elemente sind in den Figuren mit gleichen Bezugszeichen versehen.

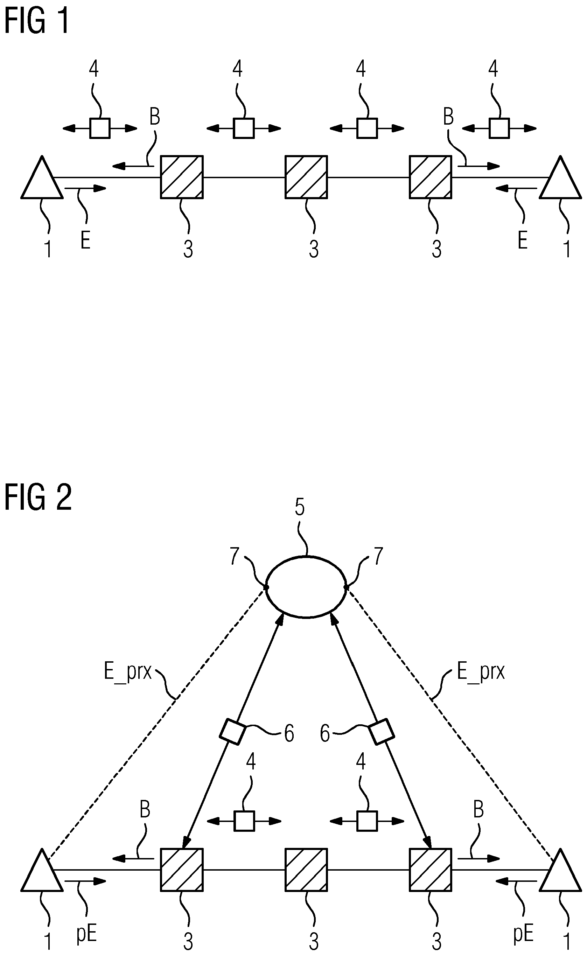

Die FIG 1 zeigt eine rein schematische Teildarstellung eines industriellen Kommunikationsnetzwerkes 1, welches der Datenkommunikation der Komponenten einer industriellen, technischen Anlage dient.

Von der Anlage sind in der FIG 1 nur insgesamt zwei Endgeräte 1 gezeigt. Bei diesen handelt es sich vorliegend um PROFINET-Endgeräte in Form von Feldgeräten, die Sensoren und/oder Aktoren umfassen bzw. die mit Sensoren und/oder Aktoren verbindbar bzw. verbunden sind. Jedes der Endgeräte 1 umfasst einen integrierten Netzwerkknoten in Form eines Switches. Jedes der Endgeräte 1 hat mehr als einen Port, bei dem hier beschriebenen Ausführungsbeispiel konkret zwei Ports.

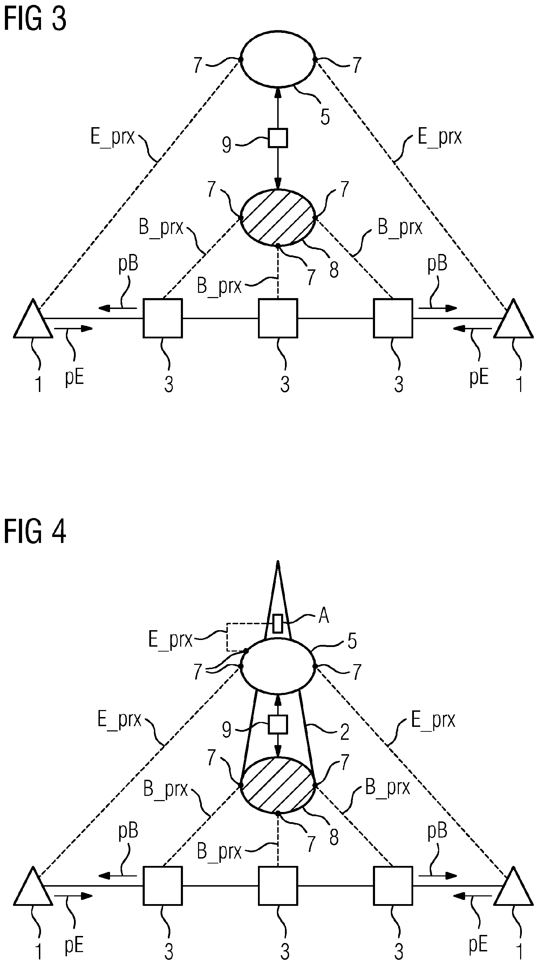

Die Endgeräte 1 sind einer speicherprogrammierbaren Steuerung (SPS) 2 zugeordnet, konkret einer PROFINET-SPS, die in der FIG 1 nicht dargestellt ist, jedoch der FIG 4 entnommen werden kann. Die Steuerung 2 empfängt im Betrieb in hinlänglich vorbekannter Weise zur Überwachung eines in der Anlage ablaufenden Prozesses periodisch mittels Sensoren erfasste Messdaten von den Endgeräten 1 und/oder sendet periodisch Stellwerte für Aktoren an diese, damit auf den Prozess periodisch eingewirkt werden kann. Die Datenübertragung zwischen der Steuerung 2 und den Endgeräten 1 ist entsprechend im Rahmen einer bzw. für eine Anwendung A (POFINET-Steueranwendung) erforderlich.

Weiterhin in der FIG 1 gezeigt sind drei Netzwerkknoten 3 in Form von Bridges, über welche die Endgeräte 1 verbunden sind und Daten austauschen können. Die Steuerung 2 kann ebenfalls an einem Port einer der drei Netzwerkknoten angeschlossen sein. Es sei angemerkt, dass die Steuerung 2 aus Sicht des Netzwerkes auch ein Endgerät dargestellt bzw. als solches aufgefasst wird.

Um eine gesicherte Übertragung der Steuerdaten in Echtzeit, insbesondere mit garantierter Latenz zu ermöglichen, wie es für einen reibungsfreien Betrieb der Anlage wesentlich ist, soll die periodische Datenübertragung über geschützte Verbindungen, vorliegend als TSN-Streams erfolgen.

Dazu sind von den Endgeräten 1 und Netzwerkknoten 3 Netzwerkfunktionen zu erbringen. U.a. ist ein Reservierungsprotokoll, vorliegend SRP gemäß IEEE 802.1 Q abzuwickeln.

Dies kann lokal in den Endgeräten 1 und Netzwerkknoten 3 erfolgen, was dem in FIG 1 dargestellten Szenario entspricht.

Zwischen benachbarten Endgeräten 1 und Netzwerkknoten 3 werden LRPDUs 4 (Link-lokale Registrierungs Protokoll Dateinheiten, englisch: Link-local Registration Protocol Data Units) ausgetauscht, um die Netzwerkkontrollfunktionen zu erbringen - im Fall von SRP um einen Stream zwischen den beteiligen Endgeräten einzurichten.

Insbesondere bei den PROFINET-Endgeräten 1 handelt es sich um sehr einfache 2-Port-Geräte mit vergleichsweise geringer Rechenleistung. Darüber hinaus sollen das für PROFINET bekannte Konfigurationsmodell trotz Nutzung geschützter Verbindungen beibehalten werden und es soll ein Standard-konformes Verhalten für weitere Geräte, die an das Netzwerk angeschlossen werden sollen, etwa Kameras, Bedieneinheiten oder andere Komponenten, ermöglicht werden.

Hierfür weist die Steuerung 2 eine Geräte-Netzwerkfunktions-Einheit 5 auf, die wenigstens eine für die Einrichtung geschützter Verbindungen erforderliche Netzwerkfunktion der der Steuerung 2 zugeordneten Endgeräte 1 als virtualisierte Netzwerkfunktion stellvertretend für die Endgeräte 1 ausführt.

Die Ausführung der wenigstens einen Netzwerkfunktion durch die zentrale Geräte-Netzwerfunktions-Einheit 5 umfasst dabei, dass von dieser wenigstens ein standardisiertes Netzwerkfunktions-Protokoll stellvertretend für die der Steuerung zugeordneten Endgeräte 1 abgewickelt wird. Vorliegend wird ein für die Einrichtung geschützter Verbindungen erforderliches Reservierungsprotokoll stellvertretend abgewickelt, konkret SRP. Für jedes der Endgeräte 1 wird dabei eine Instanz 7 von SRP in der Einheit 5 ausgeführt.

Die Geräte-Netzwerkfunktions-Einheit 5 übernimmt vorliegend auch für die Steuerung 2 selber die erforderlichen Netzwerkfunktionen. Daher wird auch für die Steuerung 2 selber eine Instanz 7 ausgeführt.

Die Nachrichten zum Datenaustausch zwischen den Instanzen (LRPDUs 4) werden dabei zwischen den Instanzen 7 in der zentralen Einheit 5 und den lokalen Instanzen von SRP (in den Bridges 3) ausgetauscht. Die durch die Ausführung von SRP bestimmten notwendigen lokalen Einstellungen in den Geräten 1 werden dabei von der zentralen Einheit 5 auf der Steuerung 2 vorgenommen.

Von der Geräte-Netzwerkfunktions-Einheit 5 werden ferner zu wenigstens einem standardisierten Netzwerkfunktions-Protokoll gehörige Nachrichten, die weitere an dem Netzwerk teilnehmende Kommunikationsteilnehmer von den der Steuerung 2 zugeordneten Endgeräten 1 erwarten, stellvertretend für dieses generiert. Vorliegend werden von der Geräte-Netzwerkfunktions-Einheit 5 für die Rand-Netzwerkknoten, mit denen die beiden Endgeräte 1 jeweils unmittelbar verbunden sind, stellvertretend für die Endgeräte 1 Nachrichten, die im Rahmen der Abwicklung des Reservierungsprotokolls von den Randknoten 3 erwartet werden, generiert. Es werden zwischen der Geräte-Netzwerkfunktions-Einheit 5 und den beiden Rand-Knoten 3 LRPDUs 6 ausgetauscht und Einstellungen in den Endgeräten 1 vorgenommen. Die Geräte-Netzwerkfunktions-Einheit 5 generiert bei dem dargestellten Ausführungsbeispiel auch entsprechende Nachrichten, die weitere an dem Netzwerk teilnehmende Kommunikationsteilnehmer von den Steuerung 2 selber erwarten. Bei der Stream Reservierung sind unterschiedliche Nachrichten spezifiziert, so ist z.B. im Talker Advertise die Information für eine geschützte Verbindung enthalten und der Rückweg zur Quelle (Talker) wird im Netzwerk durch die Weitergabe dieser lokal in jedem Gerät gespeichert. Durch die Listener Join Information wird bei der Stream Reservierung der gewünschte Empfang der Daten durch ein Endgerät 1, in diesem Fall ein Listener, im Netzwerk mitgeteilt und die Reservierung angestoßen. Bei einer erfolgreichen lokalen Reservierung in den Netzwerkkomponenten 3 wird die Weiterleitung aktiviert. Durch die zentrale Einheit 5 werden die entsprechenden Nachrichten für die Endgeräte 1 stellvertretend interpretiert, die lokalen Einstellungen vorgenommen und die als Antwort notwendigen Nachrichten für weitere angeschlossenen Geräte generiert und stellvertretend gesendet.

Darüber hinaus werden die Endgeräte 1 von der Geräte-Netzwerkfunktions-Einheit 5 für wenigstens eine geschützte Verbindung, konkret einen Stream konfiguriert. Gleiches gilt für die Steuerung 2. Dabei wird in dem jeweiligen Listener (Empfänger) unter anderem die gültige Adresse des Streams aus dem Talker Advertise zum Empfang konfiguriert, damit eine Anwendung die korrekten Daten auswerten kann. Im Talker wird der Sendevorgang mit der Adresse des Streams konfiguriert und aktiviert, sobald eine gültige Reservierung vorhanden ist.

Die Verwendung bzw. die Anwendung des link-lokalen Registrierungsprotokolls LRP (Link-local Registration Protocol) ermöglicht insbesondere die Kombination von Netzwerkelementen und Slave-Endgeräten in einem Netzwerk. Die Ausführung der Netzwerkfunktion erfolgt dann für das jeweilige Endgerät 1 in der Steuerung 2, wodurch das Endgerät 1 selbst zum Slave wird. Die Steuerung 2 stellt dann einen Proxy dar bzw. umfasst einen solchen. Die Ausführung in dem Proxy ermöglicht so eine Zentralisierung von vielen einzelnen Instanzen einer Netzwerkfunktion in einer Steuerung 2.

Das Netzwerk ist nach dem Standard IEEE 802.1 CS ausgebildet. Somit werden die erweiterten Möglichkeiten von IEEE 802.1 CS mit den Möglichkeiten einer Virtualisierung von Funktionen im Netzwerk kombiniert. Dadurch können einfache Endgeräte entlastet werden. Zudem kann ein System mit sehr einfachen Komponenten (Endgeräten/Netzwerkknoten) und einem leistungsfähigen Proxy entstehen. Weiterhin ist es möglich, bestehende proprietäre Mechanismen zur Konfiguration der einfachen Endgeräte 1 zu verwenden, wenn die Ausführung in der Geräte-Netzwerkfunktions-Einheit 5 stattfindet, welche diese Mechanismen zur Konfiguration der Endgeräte 1 verwenden kann.

Die Endgeräte 1 sind mit anderen Worten von der oder durch die Geräte-Netzwerkfunktions-Einheit 5 der Steuerung "geproxied" bzw. "proxied". Dies ist in der FIG 2 und den folgenden Figuren durch gestrichelte Linien zwischen der Geräte-Netzwerkfunktions-Einheit 5 und dem jeweiligen Endgerät 1 angedeutet, die mit dem Bezugszeichen E_prx versehen sind. An der Geräte-Netzwerkfunktions-Einheit 5 enden die Linien in Punkten, welche repräsentieren, dass in der Geräte-Netzwerkfunktions-Einheit 5 eine Instanz 7 für das jeweilige Endgerät 1 einer Anwendung A (POFINET-Steueranwendung) vorhanden ist. Alle für die Anwendung A benötigten Endgeräte 1 - einschließlich der Steuerung 2 - sind so durch die Geräte-Netzwerkfunktions-Einheit 5 "geproxied".

Durch LLDP kann den Nachbargeräten bei Verwendung von IEEE 802.1 CS jeweils die zuständige Geräte-Netzwerkfunktions-Einheit 5 als Kommunikationspartner für das jeweilige Netzwerkkontrollprotokoll mitgeteilt werden.

Mit in FIG 2 von den beiden Endgeräten 1 jeweils zum benachbarten Knoten 3 weisenden, mit pE bezeichneten Pfeilen ist angedeutet, dass die Netzwerkfunktion der Endgeräte 1 durch die Geräte-Netzwerkfunktions-Einheit 5 "gepoxied" ist, wobei das "p" für "proxied" steht und da "E" für Endgerät (bzw. englisch Endstation) bzw. die geräte-Netzwerkfunktions-Einheit 5.

Von den Randknoten 3 zu den Endgeräten 1 weisen mit B (nicht pB) bezeichnete Pfeile, welche aufzeigen, dass die Knoten 3 in dem in FIG 2 dargestellten Szenario nicht "geproxied" sind. Dass die Netzwerkfunktionen der Knoten 3 lokal von diesen ausgeführt werden, ist auch dadurch angedeutet, dass die Knoten 3 schraffiert sind.

Selbstverständlich ist es möglich, dass in völliger Analogie zu den Endgeräten 1 auch die von diesen verschiedenen Netzwerkknoten 3 "geproxied" werden. Zu diesem Zweck kann auf der Steuerung 2 eine Knoten-Netzwerkfunktions-Einheit 8 (siehe Figuren 3 und 4) vorgesehen sein, die wenigstens eine für die Einrichtung geschützter Verbindungen erforderliche Netzwerkfunktion der der Steuerung zugeordneten Netzwerkknotens 3 als virtualisierte Netzwerkfunktion stellvertretend für die Netzwerkknoten 3 ausführt. Von der Knoten-Netzwerkfunktions-Einheit 8 können dann auch zu wenigstens einem Netzwerkfunktions-Protokoll gehörige Nachrichten, die weitere an dem Netzwerk teilnehmende Kommunikationsteilnehmer von den Netzwerkknoten 3 erwarten, stellvertretend für diese generiert werden. Die Netzwerkknoten 3 werden dann ferner bevorzugt von der Knoten-Netzwerkfunktions-Einheit 8 für wenigstens einen Stream konfiguriert. Die Konfiguration umfasst bevorzugt die Generierung von Weiterleite-Einträgen in einer Filterungs-Datenbank und/oder die Anpassung von Shapern.

Dass die Knoten 3 von der bzw. durch die Knoten-Netzwerkfunktions-Einheit 8 "geproxied" sind, und die lokalen Einstellungen durch diese, also den Proxie vorgenommen werden, ist in der Figuren 3 und 4 durch mit dem Bezugszeichen B prx versehene gestrichelte Linien von dem jeweiligen Knoten 3 zu der Knoten-Netzwerkfunktions-Einheit 8 angedeutet. Die von den beiden Randknoten 3 zu den Endgeräten 1 weisenden Pfeile sind hier ferner mit pB (nicht B) bezeichnet, wobei das "p" wiederum für "proxied" steht (und B für Bridge). In der Knoten-Netzwerkfunktions-Einheit 8 ist für jeden der drei Netzwercknoten 3 eine Instanz 7 vorgesehen. Dass die Netzwerkfunktionen der Knoten 3 hier zentralisiert durch die Steuerung, konkret die Knoten-Netzwerkfunktions-Einheit 8 erbracht werden, ist in den Figuren 3 und 4 auch dadurch angedeutet, dass die Knoten 3 jetzt ohne Schraffur, die Knoten-Netzwerkfunktions-Einheit 8 hingegen mit Schraffur dargestellt ist.

Werden sowohl Netzwerkfunktionen der Endgeräte 1 als auch der Netzwerkknoten 3 zentralisiert von der Steuerung 2 übernommen, ist ein Austausch von Nachrichten nur noch intern in der Steuerung 2 zwischen der Geräte- 5 und der Knoten-Netzwerkfunktions-Einheit 8 erforderlich. Dies geschieht wiederum in Form von LRPDUs, die in der FIG 3 mit der Bezugsziffer 9 versehen sind. Bei SRP Nachrichten wären dies entsprechend LRPDUs mit Talker Advertise und Listener Join Informationen.

Insbesondere für eine standardisierte Anbindung weiterer, über die Steuerung 2 und dieser zugeordneten Endgeräte 1 hinausgehende Geräte werden von der Geräte-Netzwerkkontrollfunktions-Einheit 5 die zu wenigstens einem standardisierten Netzwerkfunktions-Protokoll gehörigen Nachrichten, die Kommunikationsteilnehmer von wenigstens einem der Endgeräte erwarten, stellvertretend für die Endgeräte 1 generiert. In analoger Weise ermöglichen insbesondere die von der Knoten-Netzwerkfunktions-Einheit 8 zu wenigstens einem standardisierten Netzwerkfunktions-Protokoll gehörigen stellvertretend für die Netzwerkknoten 3 gesendeten Nachrichten eine standardisierte Anbindung weitere Geräte, welche mit einer lokalen Implementierung der Netzwerkfunktion die gleichen Nachrichten benötigen wie die zentralisierten Instanzen 7.

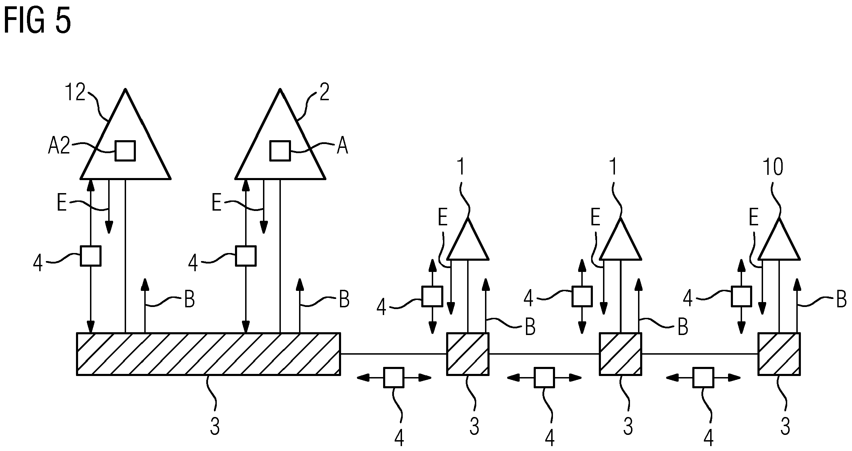

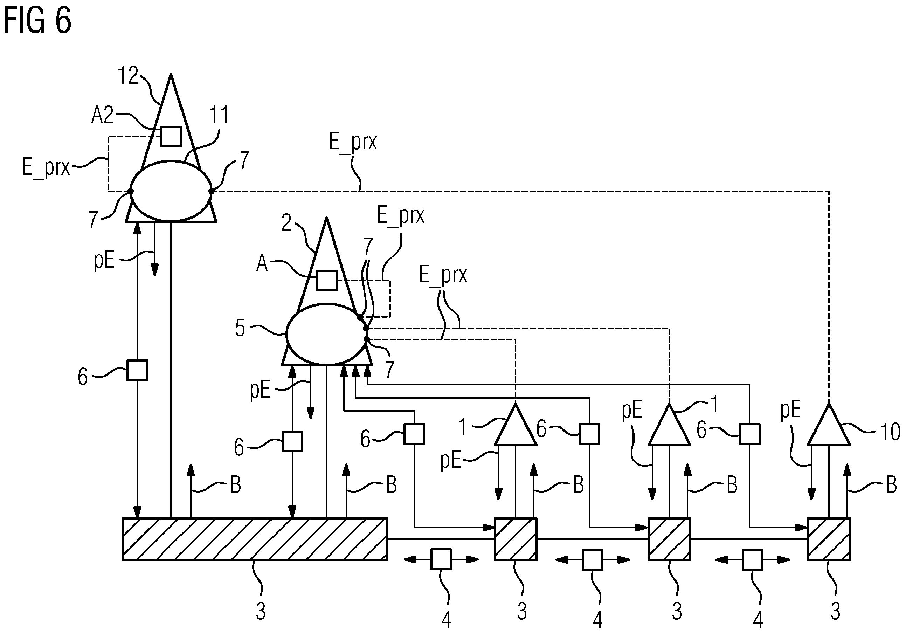

Bei mehreren Anwendungen A, A2 kann jede Anwendung ihre Endgeräte 1, 10 über einen Geräte-Netzwerkfunktions-Einheit 5, 11 (siehe FIG 6) kontrollieren, wodurch in einem Netzwerk mehrere Instanzen möglich werden. In der FIG 5 ist ein weiteres industrielles Netzwerk in schematischer Teildarstellung gezeigt, in dem mehrere Anwendungen A, A2 laufen. Bei der ersten Anwendung A handelt es sich - analog zu den vorangegangenen Figuren - um eine PROFINET-Steueranwendung, die auf einer Steuerung 2 läuft. Bei der zweiten Anwendung A 2 handelt es sich um OPC UA. Diese Anwendung läuft auf einem Server 12. Der Anwendung A sind wiederum zwei Endgeräte 1 zugeordnet und der Anwendung A2 ein Endgerät 10, welches OPC UA für die Datenkommunikation nutzt.

Bei dem in FIG 5 dargestellten Szenario sind die Netzwerkfunktionen für beide Anwendungen A, A2 lokal in den Endgeräten 1, 10 (sowie Netzwerkknoten 3) implementiert.

In der FIG 6 ist das Netzwerk gemäß FIG 5 gezeigt, wobei hier Netzwerkfunktionen der Endgeräte 1, 10 beider Anwendungen A, A2 geproxied werden. Konkret Netzwerkfunktionen der Endgeräte 1 der PROFINET-Anwendung A -in Analogie zu FIG 4 - durch eine auf der Steuerung 2 vorgesehene erste Geräte-Netzwerkfunktions-Einheit 5 und die Netzwerkfunktionen des Endgerätes 10 der zweiten Anwendung A2 durch eine zweite Geräte-Netzwerkfunktions-Einheit 11, die auf dem Server 12 vorgesehen ist. Bei der zweiten Geräte-Netzwerkfunktions-Einheit 11 handelt es sich um eine OPC-UA-Netzwerkfunktions-Einheit 11, welche mit OPC UA verbundenen Netzwerkfunktionen "proxied". Mit bzw. unter Verwendung von OPC UA kann beispielsweise eine Datenerfassung für spätere Auswertungen erfolgen.

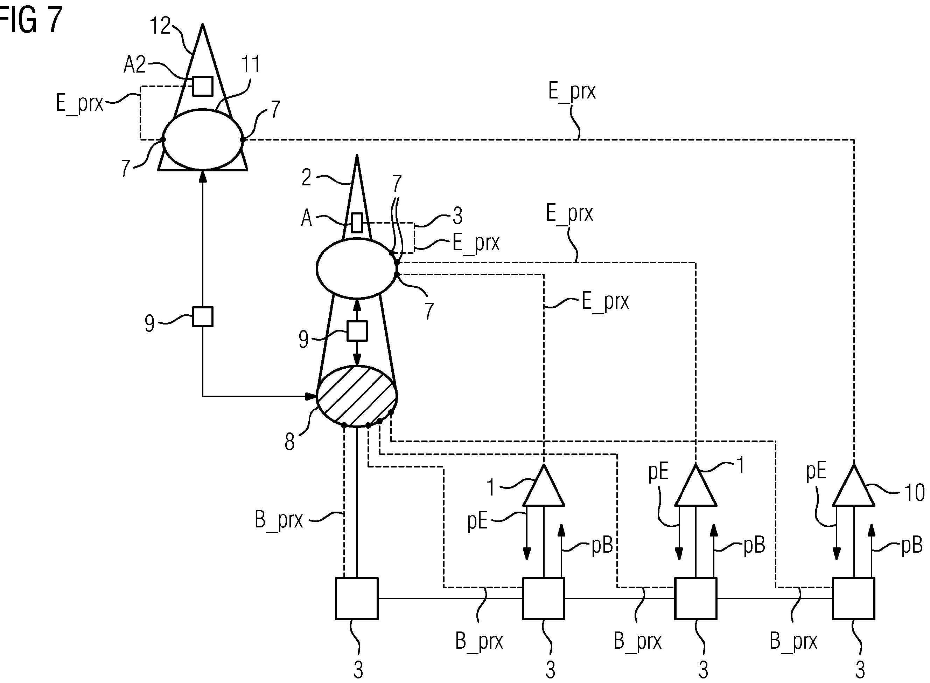

Auch in einem Szenario mit mehreren, etwa zwei Anwendungen A, A2 können zusätzlich zu Netzwerkfunktionen der Endgeräte 1, 10 auch Netzwerkfunktionen der Netzwerkknoten 3 "geproxied" werden. Dies ist in der FIG 7 dargestellt. Dann kann - in Analogie zu FIG 4 - eine Knoten-Netzwerkfunktions-Einheit 8 insbesondere auf der Steuerung 2 vorgesehen sein, welche wenigstens eine für die Einrichtung geschützter Verbindungen erforderliche Netzwerkfunktion der der Steuerung 2 zugeordneten verschiedenen Netzwerkknoten 3 als virtualisierte Netzwerkfunktion stellvertretend für die Netzwerkknoten 3 ausgeführt und zu einem Netzwerkfunktions-Protokoll gehörige Nachrichten, die weitere an dem Netzwerk teilnehmende Kommunikationsteilnehmer von den Netzwerkknoten 3 erwarten, stellvertretend für diese zu generiert. Die vorstehend im Zusammenhang mit den Figuren 3 und 4 beschriebenen Aspekte gelten hier gleichermaßen. Der einzige Unterschied zwischen diesen Figuren und der FIG 7 ist, dass in FIG 7 zusätzlich Netzwerkfunktionen des Endgerätes 10 durch die OPC-UA-Netzwerkfunktions-Einheit 11 "geproxied" werden und ein Austausch von LRPDUs 9 dann auch zwischen der Knoten-Netzwerkfunktions-Einheit 8 und der OPC-UA-Netzwerkfunktions-Einheit 11 stattfindet. Durch die Verwendung von LRPDUs 4, 9 zwischen den verschiedenen Instanzen 7 wird die Kompatibilität, die durch mehrere Anwendungen A, A2 in einem Netzwerk benötigt wird, ermöglicht.

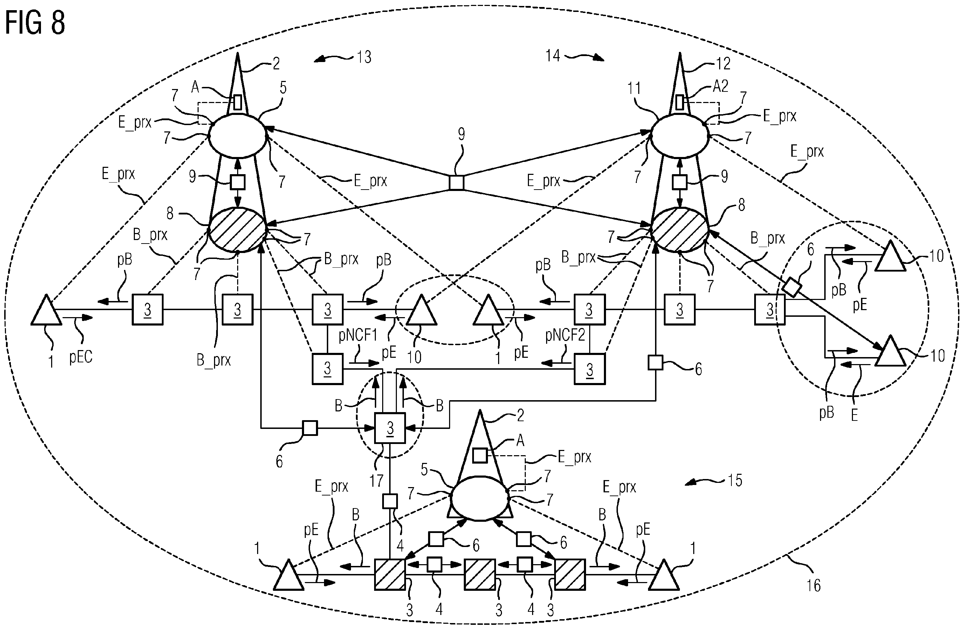

Es ist möglich, mehrere Teilnetzwerke/Teilsegmente 13, 14, 15 eines Netzwerkes mit unterschiedlichen Geräte- 5 bzw. Knoten-Netzwerkfunktions-Einheiten 8 einzurichten. Dies ist in der FIG 8 skizziert. Es sei angemerkt, dass in dem dort dargestellten Ausführungsbeispiel eine Streamklasse 16 für alle Teilsegmente 13, 14, 15 verwendet wird.

Die drei Teilsegmente 13, 14, 15 sind bei dem Szenario gemäß FIG 8 über einen zentralen Netzwerkknoten 17 verbunden, in welchem Netzwerkfunktionen lokal implementiert sind.

In dem Teilsegment 13 ist eine Steuerung 2 mit einer PROFINET-Anwendung A vorgesehen. Die Steuerung 2 weist eine Geräte-Netzwerkfunktions-Einheit 5 auf, welche sowohl für ein PROFINET-Endgerät 1, das an diesem Teilnetzwerk 13 teilnimmt und von dem die Steuerung 2 Messdaten empfängt und/oder an das die Steuerungen 2 Stellwerte sendet, als auch von einem PROFINET-Endgerät, das an dem Teilnetzwerk 14 teilnimmt und von dem die Steuerung 2 werden Messdaten erhält noch an welches sie Stellwerte sendet, wenigstens eine für die Einrichtung geschützter Verbindungen erforderliche Netzwerkfunktion als virtualisierte Netzwerkfunktion stellvertretend ausführt. Die Steuerung 2 aus dem Teilnetzwerk 13 umfasst ferner eine Knoten-Netzwerkfunktions-Einheit 8, welche Netzwerkfunktionen der vier Netzwerkknoten 3 dieses Teilnetzwerkes 13 "proxied".

Das Teilnetzwerk 14 umfasst einen Server 12, auf dem in Analogie zu FIG 6 eine OPC-UA-Netzwerkfunktions-Einheit 11 vorgesehen ist, die Netzwerkfunktionen von zwei OPC UA nutzenden Endgeräten 10 "proxied". Von den OPC UA Endgeräten 10befindet sich, wie man erkennt, eines in dem Teilnetzwerk 13 und eines in dem Teilnetzwerk 14.

Auf dem Server 12 aus dem Teilnetzwerk 14 ist in analoger Weise eine Knoten-Netzwerkfunktions-Einheit 8 vorgesehen, welche Netzwerkfunktionen der vier Netzwerkknoten 3 des Teilnetzwerkes 14 "proxied". Es sei angemerkt, dass alternativ dazu, dass die Knoten-Netzwerkfunktions-Einheit 8 auf dem Server 12 vorgesehen ist, dieses auch auf einer Steuerung, insbesondere SPS im Teilnetzwerk 14 oder auf einem angeschlossenen Rechner, etwa zusammen mit einem Netzwerkmanagement vorgesehen sein könnte.

In dem Teilnetzwerk 15 ist eine weitere PROFINET-Steuerung 2 mit einer Geräte-Netzwerkfunktions-Einheit 5 vorgesehen, welche Netzwerkfunktionen der beiden PROFINET-Endgerate 1 "proxied", welche an diesem Teilnetzwerk 15 teilnehmen. Die Netzwerkfunktionen in den drei Netzwerkknoten 3 dieses Teilnetzwerkes 15 werden lokal in diesen ausgeführt (die Knoten 3 sind entsprechend scharffiert dargestellt).

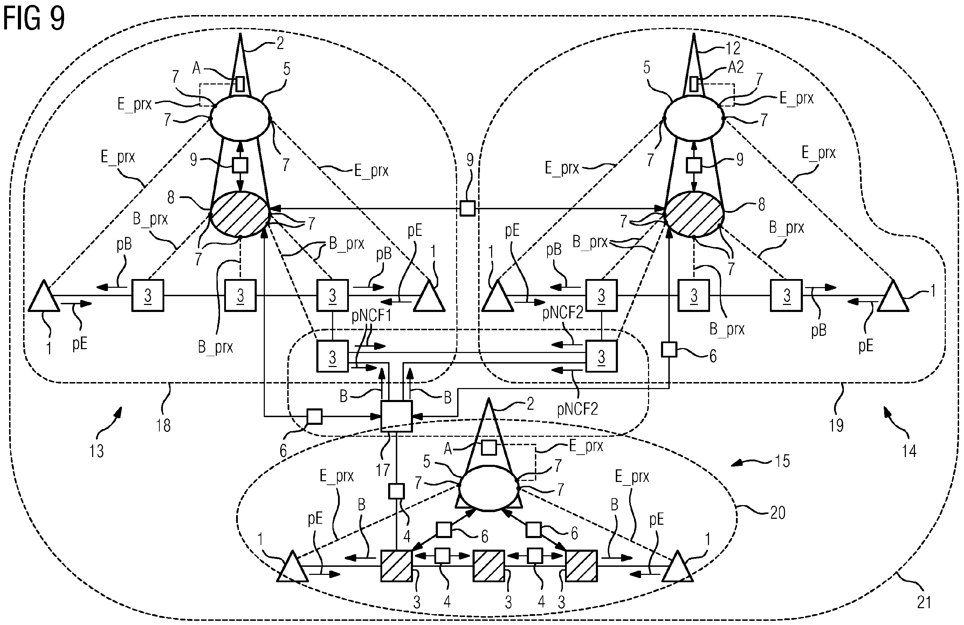

Der Austausch von LRPDUs 4, 6, 9 ist auch in der FIG 8 dargestellt. Wie man erkennt, werden LRPDUs 9 u.a. nicht nur Teilnetzwerk-intern zwischen den Geräte- 5 und den Netzwerkfunktions-Einheit 8 ausgetauscht, sondern auch zwischen der Geräte-Netzwerkfunktions-Einheit 5 aus dem Teilnetzwerk 13 und der Knoten-Netzwerkfunktions-Einheit 8 aus dem Teilnetzwerk 14 sowie der Geräte-Netzwerkfunktions-Einheit 5 aus dem Teilnetzwerk 14 und der Knoten-Netzwerkfunktions-Einheit 8 aus dem Teilnetzwerk 13. Zur besseren Trennung der Quelle der proxie-Bridge Funktionalität pB sind in der Abbildung 8 und 9 die Pfeile pNFC1 und pNFC2 verwendet worden, wenn LRPDUs von zwei unterschiedlichen Netzwerkfunktions-Einheiten 8 aufeinandertreffen.

Weiterhin ist der Einsatz von mehreren Streamklassen im gleichen Netzwerk möglich, was in FIG 6 veranschaulicht ist. Das Netzwerk entspricht dabei demjenigen gemäß FIG 8, mit dem Unterschied, dass hier in dem Teilnetzwerk 13 eine erste Streamklasse 18 (z.B. Streamklasse D), in dem Teilnetzwerk 14 eine zweite Streamklasse 19 (z.B. Streamklasse E), in dem Teilnetzwerk 15 eine dritte Streamklasse 20 (z.B. Streamklasse F) und für den Datenaustausch zwischen den Teilnetzwerken 13, 14, 15 eine vierte Streamklasse 21 (z.B: Streanklasse C) vorgesehen ist, und in der Darstellung nur eine Anwendung gezeigt ist. Die Streamklasse 21 für die teilnetzwerkübergreifende Kommunikation zeichnet sich dabei durch geringere Kommunikationsanforderungen aus als die Klassen 18, 19, 20.

Durch eine lokale Konfiguration des Netzwerkes für eine hoch performante Streamklasse (z.B. gemäß PROFINET IRT Klassen D, E, F, Klassen 18, 19, 20 in FIG 9) und einer gemeinsamen überlagerten Klasse mit niedrigeren Kommunikationsanforderungen (PROFINET RT - entspricht SR-Class C, Klasse 21 in FIG 9) können größere Netzwerke aufgebaut werden. In einer lokalen Streamklasse 18, 19, 20 sind dann Anwendungen A, A2 mit höchsten Anforderungen ermöglicht - z. B. die Steuerung von Motoren für die Maschine oder einen Roboter. In der Klasse 21 mit niedrigeren Anforderungen kann beispielsweise eine überlagerte Regelung z.B. zwischen Maschinen oder die Bewegungssynchronisation zwischen mehreren Robotern erfolgen. Dabei können die Netzwerkfunktionen der Netzwerkknoten 3 zentralisiert in der jeweiligen Steuerung 2 (Teilnetzwerke 13 und 14) und/oder lokal in Netzwerkknoten 3 (Teilnetzwerke 15) ausgeführt werden. Die Funktionen in den Endgeräten 1, 10 können ebenfalls zentral oder verteilt ausgeführt werden.

Es sei angemerkt, dass die in den Figuren dargestellten Steuerungen 2 allesamt Ausführungsbeispiel erfindungsgemäßer Steuerungen sind, welche zur Durchführung der beschriebenen Ausführungsbeispiele des erfindungsgemäßen Verfahrens ausgebildet und/oder eingerichtet sind.

Die in den Figuren 2 bis 9 gezeigten industriellen Netzwerke sind ferner Ausführungsbeispiele erfindungsgemäßer Netzwerke.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Datenkommunikation in einem industriellen Netzwerk, an dem wenigstens eine Steuerung (2) und wenigstens ein von der Steuerung (2) verschiedenes, der Steuerung (2) zugeordnetes Endgerät (1), von dem die Steuerung (2) Messdaten empfängt und/oder an das die Steuerung (2) Stellwerte sendet, und das einen integrierten Netzwerkknoten aufweist, als Kommunikationsteilnehmer teilnehmen, bei dem
von einer auf der wenigstens einen Steuerung (2) vorgesehenen Geräte-Netzwerkfunktions-Einheit (5) wenigstens eine Netzwerkfunktion des wenigstens einen der Steuerung (2) zugeordneten Endgerätes (1) als virtualisierte Netzwerkfunktion stellvertretend für das wenigstens eine der Steuerung (2) zugeordnete Endgerät (1) ausgeführt wird,
und von der Geräte-Netzwerkfunktions-Einheit (5) zu wenigstens einem Netzwerkfunktions-Protokoll gehörige Nachrichten, die weitere an dem Netzwerk teilnehmende Kommunikationsteilnehmer von dem wenigstens einen der Steuerung (2) zugeordneten Endgerät (1) erwarten, stellvertretend für dieses generiert werden.

2. Verfahren nach Anspruch 1,
**dadurch gekennzeichnet, dass**
von einer auf der wenigstens einen Steuerung (2) vorgesehenen Knoten-Netzwerkkontrollfunktions-Einheit (8) wenigstens eine Netzwerkfunktion wenigstens eines von dem wenigstens einen der Steuerung (2) zugeordneten Endgerät (1) verschiedenen Netzwerkknotens (3) als virtualisierte Netzwerkfunktion stellvertretend für den Netzwerkknoten (3) ausgeführt wird, und von der Knoten-Netzwerkfunktions-Einheit (8) zu wenigstens einem Netzwerkfunktions-Protokoll gehörige Nachrichten, die weitere an dem Netzwerk teilnehmende Kommunikationsteilnehmer von dem wenigstens einen Netzwerkknoten (3) erwarten, stellvertretend für diesen generiert werden.

3. Verfahren nach Anspruch 1 oder 2,
**dadurch gekennzeichnet, dass**
die Ausführung der wenigstens einen Netzwerkfunktion durch die zentrale Geräte-Netzwerfunktions-Einheit (3) umfasst, dass von dieser wenigstens ein standardisiertes Netzwerkfunktions-Protokoll stellvertretend für das wenigstens eine der Steuerung (2) zugeordnete Endgerät (1) abgewickelt wird, und/oder
die Ausführung der wenigstens einen Netzwerkfunktion durch die Knoten-Netzwerfunktions-Einheit (8) umfasst, dass von dieser wenigstens ein standardisiertes Netzwerkfunktions-Protokoll stellvertretend für den wenigstens einen Netzwercknoten (3) abgewickelt wird.

4. Verfahren nach einem der vorhergehenden Ansprüche,
**dadurch gekennzeichnet, dass**
ein für die Einrichtung geschützter Verbindungen erforderliches Reservierungsprotokoll von der Geräte-Netzwerkfunktions-Einheit (5) als virtualisierte Netzwerkfunktion stellvertretend für das wenigstens eine der Steuerung (2) zugeordnete Endgerät (1) ausgeführt wird, und/oder
ein für die Einrichtung geschützter Verbindungen erforderliches Reservierungsprotokoll von der Knoten-Netzwerkfunktions-Einheit (8) als virtualisierte Netzwerkfunktion stellvertretend für den wenigstens einen Netzwerkknoten (3) ausgeführt wird.

5. Verfahren nach Anspruch 4,
**dadurch gekennzeichnet, dass**
von der Geräte-Netzwerkfunktions-Einheit (5) zu dem Reservierungsprotokoll gehörige Nachrichten, die weitere an dem Netzwerk teilnehmende Kommunikationsteilnehmer von dem wenigstens einen der Steuerung (2) zugeordneten Endgerät (1) erwarten, stellvertretend für dieses generiert werden, und/oder von der Knoten-Netzwerkfunktions-Einheit (8) zu dem Reservierungsprotokoll gehörige Nachrichten, die weitere an dem Netzwerk teilnehmende Kommunikationsteilnehmer von dem wenigstens einen Netzwerkknoten (3) erwarten, stellvertretend für diesen generiert werden.

6. Verfahren nach einem der vorhergehenden Ansprüche,
**dadurch gekennzeichnet, dass**
das wenigstens eine der Steuerung (2) zugeordnete Endgerät (1) von der Geräte-Netzwerkfunktions-Einheit (5) konfiguriert wird, und/oder
wenigstens ein Netzwerkknoten (3) von der Knoten-Netzwerkfunktions-Einheit (8) konfiguriert wird, wobei die Konfiguration bevorzugt die Generierung von Weiterleite-Einträgen in einer Filterungs-Datenbank und/oder die Anpassung von Shapern umfasst.

7. Verfahren nach einem der vorhergehenden Ansprüche,
**dadurch gekennzeichnet, dass**
der wenigstens einen Steuerung (2) mehrere jeweils einen integrierten Netzwerkknoten aufweisende Endgeräte (1) zugeordnet sind, von denen die wenigstens eine Steuerung (2) jeweils Messdaten empfängt und/oder an die die wenigstens ein Steuerung (2) jeweils Stellwerte sendet, und die Geräte-Netzwerkfunktions-Einheit (5) für jedes zugeordnete Endgeräte (1) wenigstens eine Netzwerkfunktion als virtualisierte Netzwerkfunktion stellvertretend ausführt, wobei die Geräte-Netzwerkfunktions-Einheit (5) bevorzugt für jedes zugeordnete Endgerät (1) eine Instanz für wenigstens eine zu dem jeweiligen Endgerät (1) gehörige Netzwerkfunktion umfasst, und/oder der wenigstens einen Steuerung (2) mehrere zu dem wenigstens einen der Steuerung (2) zugeordneten Endgerät (1) verschiedene Netzwerkknoten (3) zugeordnet sind, und
die Knoten-Netzwerkfunktions-Einheit (8) für jeden zugeordneten Netzwerkknoten (3) wenigstens eine Netzwerkfunktion als virtualisierte Netzwerkfunktion stellvertretend ausführt, wobei die Knoten-Netzwerkfunktions-Einheit (8) bevorzugt für jeden zugeordnete Netzwerkknoten (3) eine Instanz für wenigstens eine zu dem jeweiligen Netzwerkknoten (3) gehörige Netzwerkfunktion umfasst.

8. Verfahren nach einem der vorhergehenden Ansprüche,
**dadurch gekennzeichnet, dass**
die wenigstens eine Steuerung (2) eine PROFINET-Steuerung ist.

9. Verfahren nach einem der vorhergehenden Ansprüche,
**dadurch gekennzeichnet, dass**
für verschiedene Anwendungen verschiedenen Geräte-Netzwerkfunktions-Einheiten (5) vorgesehen sind, von denen jeweils wenigstens eine für die jeweilige Anwendung erforderliche Netzwerkfunktion wenigstens eines Endgerätes (1) als virtualisierte Netzwerkfunktion stellvertretend für das wenigstens eine Endgerät (1) ausgeführt wird.

10. Verfahren nach einem der vorhergehenden Ansprüche,
**dadurch gekennzeichnet, dass**
das Netzwerk mehrere Teilnetzwerke (13, 14, 15) umfasst und an mehreren der Teilnetzwerke (13, 14, 15) jeweils eine Steuerung (2) und wenigstens ein dieser zugeordnetes Endgerät (19, von dem die jeweilige Steuerung (2) Messdaten empfängt und/oder an das die jeweilige Steuerung (2) Stellwerte sendet, teilnimmt, wobei auf den Steuerungen (2) mehrere Teilnetzwerke (13, 14, 15) eine zentrale Geräte-Netzwerkfunktions-Einheit (5) vorgesehen ist, die wenigstens eine Netzwerkfunktion wenigstens eines Endgerätes (1) des jeweiligen Teilnetzwerkes (13, 14, 15) als virtualisierte Netzwerkfunktion stellvertretend ausführt,
und von der Geräte-Netzwerkfunktions-Einheit (5) zu wenigstens einem Netzwerkfunktions-Protokoll gehörige Nachrichten, die weitere an dem Netzwerk teilnehmende Kommunikationsteilnehmer von wenigstens einem der Endgeräte (1) des jeweiligen Teilnetzwerkes (13, 14, 15) erwarten, stellvertretend für dieses generiert werden.

11. Verfahren nach Anspruch 10,
**dadurch gekennzeichnet, dass**
die Geräte-Netzwerkfunktions-Einheit (5) der Steuerung (2) wenigstens eines Teilnetzwerkes (13, 14, 15) wenigstens eine Netzwerkfunktion wenigstens eines Endgerätes (1) eines anderen Teilnetzwerkes (13, 14, 15) als virtualisierte Netzwerkfunktion stellvertretend ausführt, und/oder von der Geräte-Netzwerkfunktions-Einheit (5) einer Steuerung (2) wenigstens eines Teilnetzwerkes zu wenigstens einem Netzwerkfunktions-Protokoll gehörige Nachrichten, die Kommunikationsteilnehmer von wenigstens einem Endgerät eines anderen Teilnetzwerkes (13, 14, 15) erwarten, stellvertretend für dieses generiert werden.

12. Verfahren nach Anspruch 10 oder 11,
**dadurch gekennzeichnet, dass**
zu jedem Teilnetzwerk (13, 14, 15) eine andere Anwendung gehört.

13. Verfahren nach einem der Ansprüche 10 bis 12,
**dadurch gekennzeichnet, dass**
der Datenaustausch über geschützte Verbindungen erfolgt und für den Datenaustausch innerhalb wenigstens eines Teilnetzwerkes (13, 14, 15) eine andere Verbindungsklasse verwendet wird als für den Datenaustausch innerhalb wenigstens eines anderen Teilnetzwerkes (13, 14, 15).

14. Verfahren nach einem der Ansprüche 10 bis 13,
**dadurch gekennzeichnet, dass**
der Datenaustausch über geschützte Verbindungen erfolgt und für den Datenaustausch zwischen verschiedenen Teilnetzwerken (13, 14, 15) eine Verbindungsklasse mit geringeren Kommunikationsanforderungen genutzt wird als für den Teilnetzwerk-internen Datenaustausch.

15. Verfahren nach einem der Ansprüche 10 bis 14,
**dadurch gekennzeichnet, dass**
auf den Steuerungen (2) mehrere Teilnetzwerke (13, 14, 15) eine zentrale Knoten-Netzwerkfunktions-Einheit (8) vorgesehen ist, die wenigstens eine Netzwerkfunktion wenigstens eines Netzwerkknotens (3) des jeweiligen Teilnetzwerkes (13, 14, 15) als virtualisierte Netzwerkfunktion stellvertretend ausführt,
und von der Knoten-Netzwerkfunktions-Einheit (8) zu wenigstens einem Netzwerkfunktions-Protokoll gehörige Nachrichten, die weitere an dem Netzwerk teilnehmende Kommunikationsteilnehmer von wenigstens einem der Netzwerkknoten (3) des jeweiligen Teilnetzwerkes (13, 14, 15) erwarten, stellvertretend für dieses generiert werden.

16. Verfahren nach einem der vorhergehenden Ansprüche,
**dadurch gekennzeichnet, dass**
an dem Netzwerk wenigstens ein Kommunikationsteilnehmer, insbesondere Endgerät (10) teilnimmt, der OPC UA für die Datenkommunikation nutzt, und eine OPC-UA-Netzwerkfunktions-Einheit (11) auf einer von dem wenigstens einen OPC UA nutzenden Kommunikationsteilnehmer verschiedenen Recheneinrichtung (12) vorgesehen ist, wobei von der OPC-UA-Netzwerkfunktions-Einheit (11) wenigstens eine Netzwerkfunktion des wenigstens einen OPC UA nutzenden Kommunikationsteilnehmers (10) als virtualisierte Netzwerkfunktion stellvertretend für diesen ausgeführt wird,
und von der OPC-UA-Netzwerkfunktions-Einheit (11) zu wenigstens einem Netzwerkfunktions-Protokoll gehörige Nachrichten, die weitere an dem Netzwerk teilnehmende Kommunikationsteilnehmer von dem wenigstens einen OPC UA nutzenden Kommunikationsteilnehmer (10) erwarten, stellvertretend für diesen generiert werden.

17. Steuerung (2), insbesondere PROFINET-Steuerung, die zur Durchführung des Verfahrens nach einem der vorhergehenden Ansprüche ausgebildet und/oder eingerichtet ist, wobei die Steuerung bevorzugt
eine Geräte-Netzwerkfunktions-Einheit (5) aufweist, die dazu ausgebildet und/oder eingerichtet ist, wenigstens eine Netzwerkfunktion wenigstens eines der Steuerung (2) zugeordneten, einen integrierten Netzwerkknoten aufweisenden Endgerätes (1), von dem die Steuerung (2) Messdaten empfängt und/oder an das die Steuerung (2) Stellwerte sendet, als virtualisierte Netzwerkfunktion stellvertretend für das wenigstens eine der Steuerung (2) zugeordnete Endgerät (1) auszuführen,
und um zu wenigstens einem Netzwerkfunktions-Protokoll gehörige Nachrichten, die weitere Kommunikationsteilnehmer von dem wenigstens einen der Steuerung (2) zugeordneten Endgerät (1) erwarten, stellvertretend für dieses zu generieren.

18. Steuerung nach Anspruch 17,
**dadurch gekennzeichnet, dass**
eine Knoten-Netzwerkfunktions-Einheit (8) aufweist, die dazu ausgebildet und/oder eingerichtet ist, wenigstens eine Netzwerkfunktion wenigstens eines der Steuerung zugeordneten Netzwerkknotens als virtualisierte Netzwerkfunktion stellvertretend für wenigstens einen der Steuerung zugeordneten Netzwerkknoten (3) auszuführen,
und um zu wenigstens einem Netzwerkfunktions-Protokoll gehörige Nachrichten, die weitere Kommunikationsteilnehmer von dem wenigstens einem der Steuerung (2) zugeordneten Netzwercknoten (3) erwarten, stellvertretend für diesen zu generieren.

19. Netzwerk, insbesondere für eine Automatisierungsanlage und/oder Fertigungsanlage, mit wenigstens einer Steuerung gemäß Anspruch 17 oder 18.

20. Computerprogramm umfassend Programmcode-Mittel zur Durchführung des Verfahrens nach einem der Ansprüche 1 bis 16.

21. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 16 durchzuführen.
